**Europäisches Patentamt**

**European Patent Office**

**Office européen des brevets**

(11) Publication number: **0 178 157**
**B1**

(12) **EUROPEAN PATENT SPECIFICATION**

(45) Date of publication of patent specification: **19.12.90**

(21) Application number: **85307202.3**

(22) Date of filing: **08.10.85**

(51) Int. Cl.⁵: **G 11 B 15/02**

(54) **Signal reproduction apparatus.**

(30) Priority: **08.10.84 JP 211035/84**
**30.03.85 JP 47970/85**

(43) Date of publication of application:
**16.04.86 Bulletin 86/16**

(45) Publication of the grant of the patent:
**19.12.90 Bulletin 90/51**

(84) Designated Contracting States:
**AT DE FR GB NL**

(56) References cited:
**DE-A-2 855 935**
**GB-A-2 125 199**
**US-A-4 221 975**
**US-A-4 455 452**

**GRUNDIG TECHNISCHE INFORMATIONEN, vol. 28, no. 3, 1981, pages 119-128, Regensburg; F. MEIERHÖFER "Das Bedienteil und die Uhr des Grundig-Videorecorders Video 2x4 super"**

(73) Proprietor: **SONY CORPORATION**
**7-35 Kitashinagawa 6-Chome Shinagawa-ku Tokyo 141 (JP)**

(72) Inventor: **Morishima, Shinichi c/o Patent Division**
**Sony Corporation 6-7-35 Kitashinagawa Shinagawa-ku Tokyo 141 (JP)**
Inventor: **Tanaka, Shiyousuke c/o Patent Division**
**Sony Corporation 6-7-35 Kitashinagawa Shinagawa-ku Tokyo 141 (JP)**
Inventor: **Ohtani, Takahide c/o Patent Division**
**Sony Corporation 6-7-35 Kitashinagawa Shinagawa-ku Tokyo 141 (JP)**

(74) Representative: **Thomas, Christopher Hugo et al**
**D Young & Co 10 Staple Inn London WC1V 7RD (GB)**

# EP 0 178 157 B1

**Description**

This invention relates to signal reproduction apparatus for reproducing a video signal and/or an audio signal from a recording medium.

Known video tape recorders (VTRs) include those having various special reproducing functions, such as reverse reproduction or variable speed reproduction, as well as ordinary recording and reproducing functions. The various operational modes are set and switched using key switches or touch switches, and rotary dials are utilized for a so-called JOG mode operation of variable speed reproduction.

If a large number of different functions are to be realized with a VTR, the provision of control inputs for the control of these operations is inevitably complicated.

Grundig Technische Informationen Vol. 28, no. 3, 1981, pages 119 to 128 discloses a signal reproducing apparatus in accordance with the precharacterizing part of claim 1.

According to the present invention there is provided a signal reproduction apparatus for reproducing a video signal and/or an audio signal from a recording medium with data reading means, the apparatus comprising:

a panel having a plurality of detection regions; and

drive control means for controlling the relative speeds of said data reading means and said recording medium such as to reproduce signals from said recording medium;

characterized by:

touch detection means for detecting the touched state of each of said detection regions;

first memory means for temporarily storing detection output data from said touch detection means;

recognition means for recognizing touched states of said panel as respective patterns according to data read out from said first memory means;

second memory means for temporarily storing pattern data obtained by said recognition means;

data comparison means for comparing pattern data representing the prevailing touched state obtained from said recognition means and pattern data representing the preceding touched state obtained from said second memory means and detecting a change in the pattern data; and

control data generating means for providing preset control data according to comparison output data obtained from said data comparison means;

whereby a video signal and/or an audio signal is reproduced from said recording medium at a speed corresponding to the distance between a position at which said panel is touched, and a position at which said panel is touched a predetermined period of time afterwards, and in the direction corresponding to the direction from the first-touched position to the second-touched position.

The invention will now be described by way of example with reference to the accompanying drawings, throughout which like parts are referred to by like references, and in which:

Figure 1 is a block diagram of the electrical system of an embodiment of signal reproduction apparatus according to the present invention;

Figures 2A and 2B are a front view and a side view respectively, both partly broken away, of a touch panel used in the embodiment of Figure 1;

Figures 3A and 3B are waveform diagrams for explaining the operation on touching the touch panel;

Figures 4A to 4G are views showing touch panel touch operational states recognized as respective patterns by a recognition unit;

Figures 5A to 5C are views illustrating the procedure for pattern normalization of the recognition unit;

Figures 6A, 6B, 7A, 7B, 8A to 8C, 9A, 9B, 10A and 10B are views showing touch panel touch operational states for explaining the operational mode setting control of the embodiment;

Figure 11 is a schematic front view showing a touch panel in a modified embodiment in which the touch panel is allotted to different operational control modes; and

Figure 12 is a schematic view showing a modification of the touch panel.

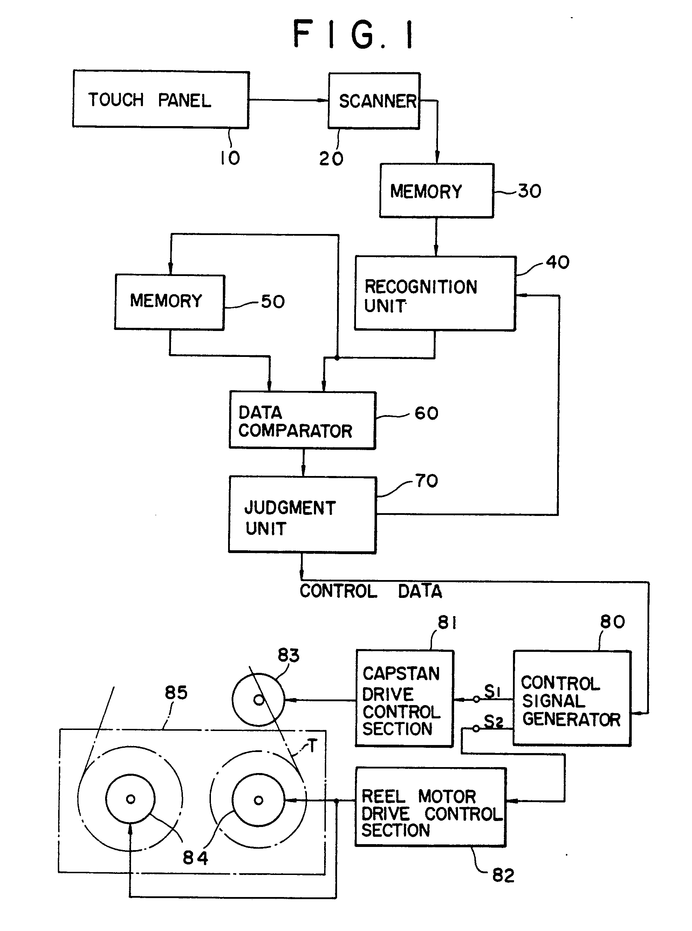

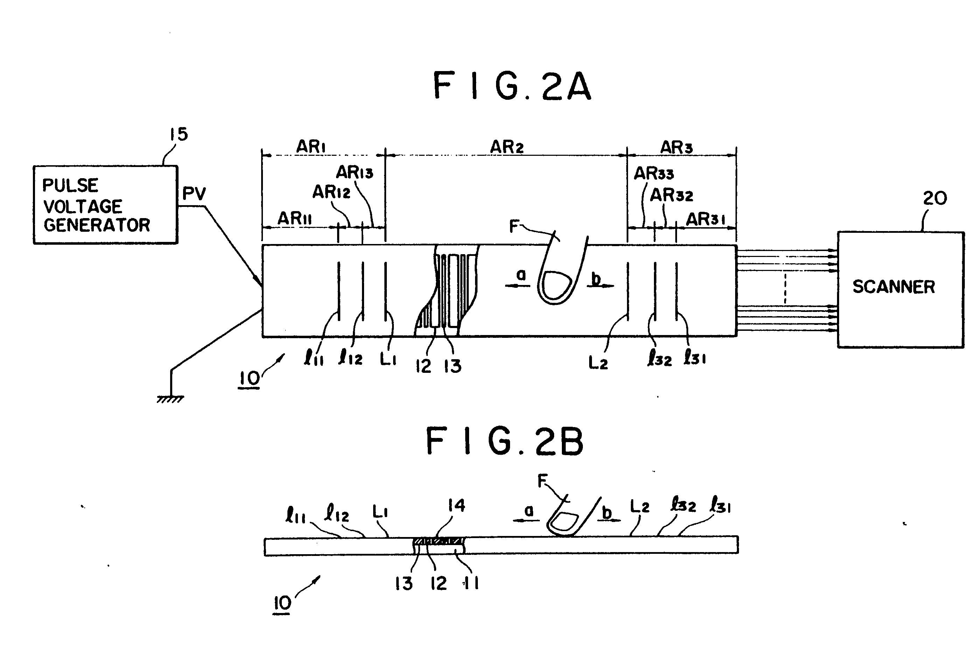

In the embodiment of Figures 1 and 2, the touch panel 10 includes an insulating base 11, one surface of which is provided with an alternate arrangement of detection electrodes 12 and grounding electrodes 13, the electrodes 12 and 13 being covered by an insulating cover film 14. The surface of the insulating cover film 14 has ridges L1 and L2, which serve as boundaries dividing the touch panel 10 into first to third regions AR1 to AR3. The surface also has thinner ridges l11, l12, .... l31 and l32 which serve as boundaries dividing the first and third regions AR1 and AR3 into sub-regions AR11 to AR13 and AR31 to AR33.

The operational principles underlying the touch panel 10 make use of the capacitance of a person. A change in the capacitance between a detection electrode 12 and a grounding electrode 13 is detected, the change being caused when the user touches the insulating cover film 14 with a finger F. The individual detection electrodes 12 are sequentially scanned by a scanner 20.

More specifically, a predetermined pulse voltage PV is supplied from a pulse voltage generator 15 to each of the detection electrodes 12 through a predetermined resistor (not shown). The grounding electrodes 13 are connected together. Each detection electrode 12 and one grounding electrode 13 adjacent thereto constitute a touch operation detection section. That is, a plurality of touch operation detection sections are arranged in a row on one surface of the insulating base 11. With respect to these touch operation sections, a touch operation surface is provided on the insulating cover film 14 such that it can be rubbed by a finger F in the direction of arrow a or b.

2

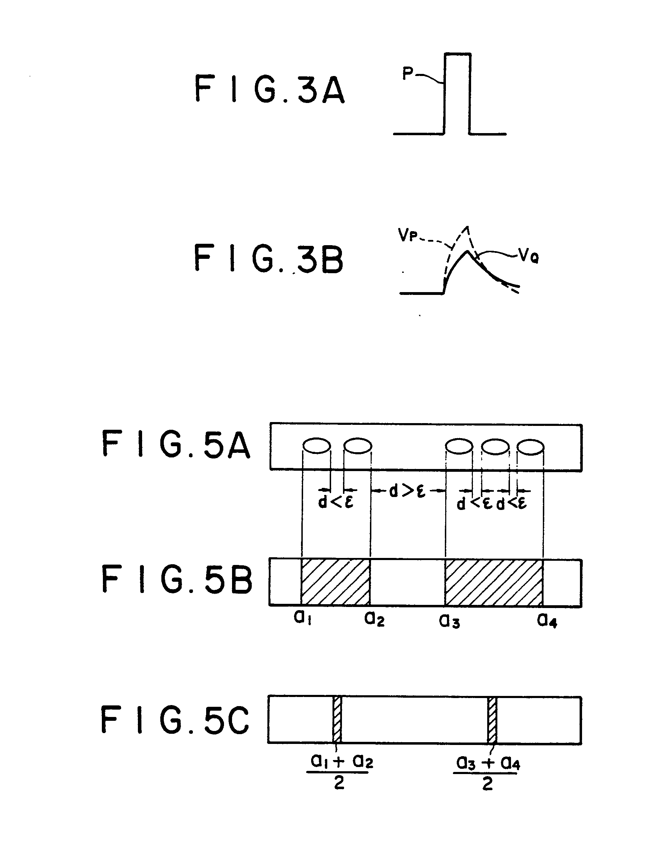

A predetermined electrostatic capacitance is formed between the detection electrode 12 and the grounding electrode 13 of each touch operation detection section. The predetermined pulse voltage PV that is supplied from the pulse voltage generator 15 to each detection electrode 12 through a predetermined resistor, has a waveform P as shown in Figure 3A. If the touch operation surface is not touched by the finger F, a voltage VP as shown by a dashed line in Figure 3B is obtained at each detection electrode 12 in response to each pulse P, due to charging and discharging operations and dependent on the resistance of each resistor and the electrostatic capacitance between the detection electrode 12 and the grounding electrode 13 of each touch operation section. Then, if the touch operation surface is touched by the finger F, it is equivalent to an electrostatic capacitance, due to the presence of the finger F being connected between the detection electrode 12 and the grounding electrode 13 of each touch operation section touched by the finger F. In this case, the electrostatic capacitance between the detection electrode 12 and the grounding electrode 13 is increased. Thus, while the voltage $V_p$ as shown by the dashed line in Figure 3B is obtained in response to each pulse P at the detection electrode 12 of each touch operation section which is not being touched by the finger F, at the detection electrode 12 of each touch operation detection section which is being touched by the finger F, a voltage VQ as shown by a solid line in Figure 3B is obtained in response to each pulse P, due to the charging and discharging operations caused by the resistance mentioned above and the increased electrostatic capacitance between the detection electrode 12 and the grounding electrode 13. The voltage VQ is lower than the voltage VP obtained at the detection electrode 12 of the touch operation detection section where the touch operation surface is not touched by the finger F.

In this way, the operation of touching the touch operation surface of the touch panel 10 is detected as a change in the voltage obtained at the detection electrode 12 of each touch operation section. Each of the touch operation sections provides an output VS corresponding to the voltage obtained at the detection electrode 12.

The detection electrodes 12 of the touch operation sections of the touch panel 10 are connected to the scanner 20. The scanner 20 sequentially scans the detection electrodes 12 of the individual touch operation sections with a detection electrode at a certain predetermined position as a reference point. The scanner 20 continuously repeats this scanning sequentially and repeatedly to provide the outputs VS of the individual touch operation detection sections. The outputs VS that are sequentially derived from the touch operation detection sections by the scanner 20, are fed to a memory 30. The outputs VS for one scanning cycle of the scanner 20 are sequentially stored in the memory 30.

The detection output data for one scanning cycle read out from the memory 30 are fed to a recognition unit 40. The recognition unit 40 recognizes the touch operation state of the touch panel 10 as a corresponding pattern for each scanning cycle of the scanner 20.

The pattern data obtained from the recognition unit 40 are fed to a second memory 50 and a data comparator 60. The second memory 50 stores the pattern data from the recognition unit 40 temporarily for one scanning cycle period of the scanner 10. The data comparator 60 compares the pattern data from the recognition unit 40 and the pattern data of the preceding scanning cycle read out from the second memory 50, and detects any change in the pattern data. The output of the data comparator 60 is fed to a judgement unit 70 for judging control data corresponding to the compared output data.

The judgement unit 70 reads out preset control data according to the touch operation state of the touch panel 10 from a data table (not shown) according to the compared output data, and provides the read-out data.

The read-out control data is fed to a control signal generator 80. A tape T wound on a reel in a tape cassette 65 is transported by a reel motor 84 and a capstan motor 83. The control signal generator 80 generates a capstan motor control signal S1 and a reel motor control signal S2 in correspondence with the control data. According to these signals a capstan motor drive control section 81 drives the capstan motor 83, while a reel motor drive control section 82 drives the reel motor 84, whereby the required tape transport is realized.

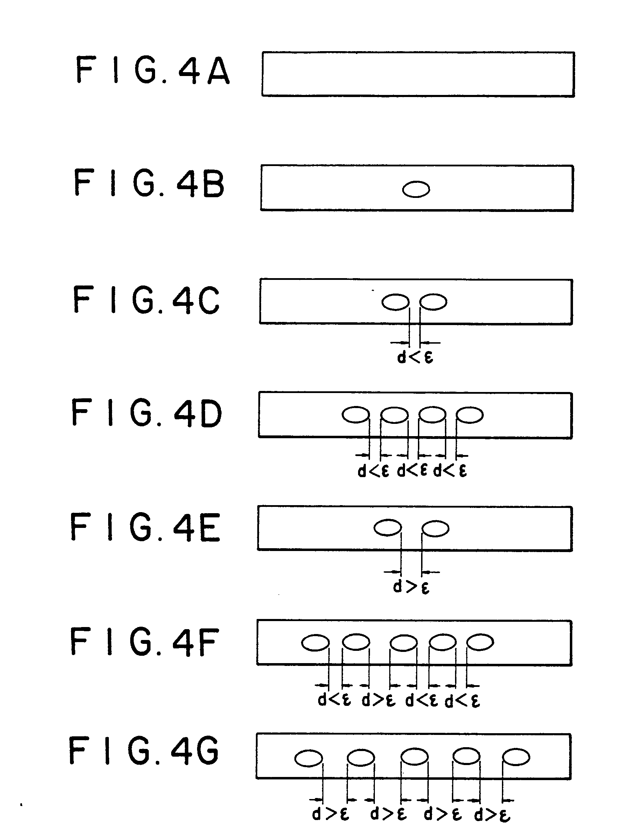

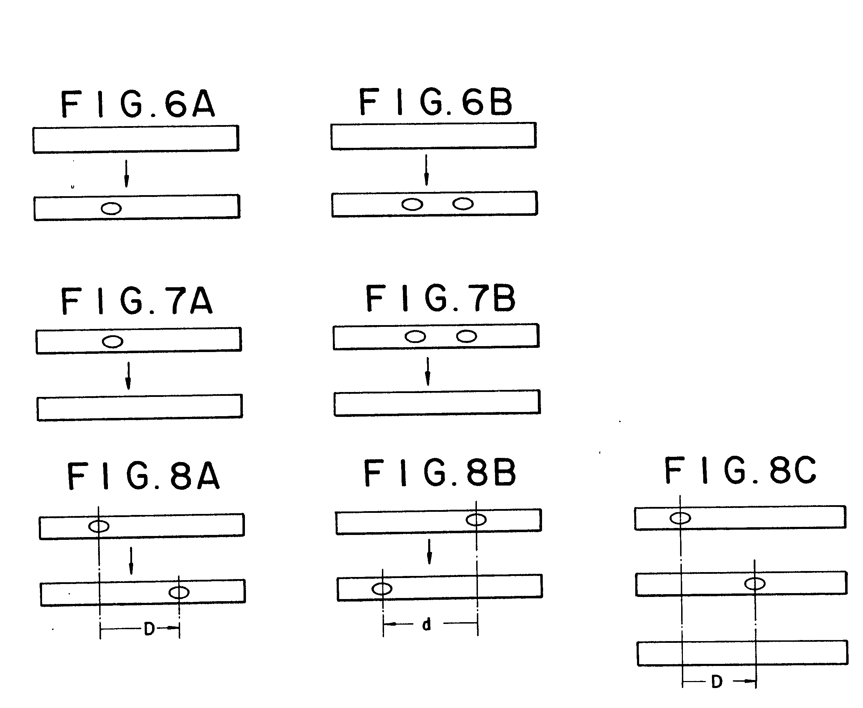

Figure 4 schematically shows touch operation states of the touch panel 10 that can be recognized by the recognition unit 40. The recognizable states are one in which the touch panel 10 is not touched at all as shown in Figure 4A; one in which the detection electrode 12 or a plurality of detection electrodes 12 forming a detection region or detection regions are touched as shown in Figures 4B to 4D; one in which two detection regions on the touch panel 10 are touched simultaneously as shown in Figures 4E and 4F; and one in which three or more detection regions are touched simultaneously as shown in Figure 4G. The judgement of the detection regions may be done by making use of the intervals in the arrangement of the detection electrodes 12. Further, the recognition unit 40 detects a series of detection regions as shown in Figure 5A on the basis of an interval $\varepsilon$, converts the detected regions into block data as shown in Figure 5B, and produces a normalized pattern as shown in Figure 5C by calculation of the centre of each of the blocks shown in Figure 5B.

In this embodiment, when three or more normalized patterns as shown in Figure 5C are produced, two patterns which are closest to one another are normalized to a single pattern, so that the recognition unit 40 produces two or less patterns at all times.

The touch panel type control data input device of this embodiment is applied to a VTR, and the first to third regions AR1 to AR3 of the touch panel 10 are allotted as the following control data input regions.

The first and third regions AR1 and AR3 are for changed speed operation in the reverse and forward directions. When the regions AR1 and AR3 are touched, changed speed reproduction modes as shown in Table 1 are set irrespective of any previous mode of the VTR.

Table 1

| Touched region | | Set operation mode |
|---|---|---|
| AR1 | AR11 | −50 times speed |
| | AR12 | −30 times speed |
| | AR13 | −10 times speed |
| AR3 | AR31 | +50 times speed |
| | AR32 | +30 times speed |
| | AR33 | +10 times speed |

The second region AR2 is used for JOG mode operations. When the user touches with a finger or fingers substantially simultaneously, and the finger or fingers are moved substantially at the same interval, the control of the operations will be as now to be described with reference to the patterns shown in Figures 6A, 6B, 7A, 7B, 8A to 8C, 9A, 9B, 10A and 10B, these patterns being normalized patterns in the region AR2.

(1) When region AR2 which has not been touched is then touched at one position (Figure 6A) or at two positions simultaneously (Figure 6B) with a finger or fingers, a still mode of the VTR is set.

(2) When a finger or fingers are removed from the region AR2 at one position (Figure 7A) or at two positions (Figure 7B), substantially simultaneously in the case of two fingers, the previous mode of the VTR is maintained. For example, when the finger is removed to change the state of Figure 6A to the state of Figure 7A, the still mode is maintained.

(3) When a finger touching the region AR2 is moved to the right (Figure 8A) or to the left (Figure 8B), the VTR performs the JOG mode operation at a speed corresponding to the direction and distance of movement of the finger.

For example, when the finger is moved by a distance D to the right, the tape is fed in the forward direction at a speed corresponding to the distance D. In the case of Figure 8B, the tape is fed in the reverse direction at a speed corresponding to the distance d. Figure 8C shows a finger being removed from the panel after tracing the panel to the right. This means a combination of the case of Figure 7A after the case of Figure 8A. It will be seen that the state of Figure 8A is maintained after the finger is removed.

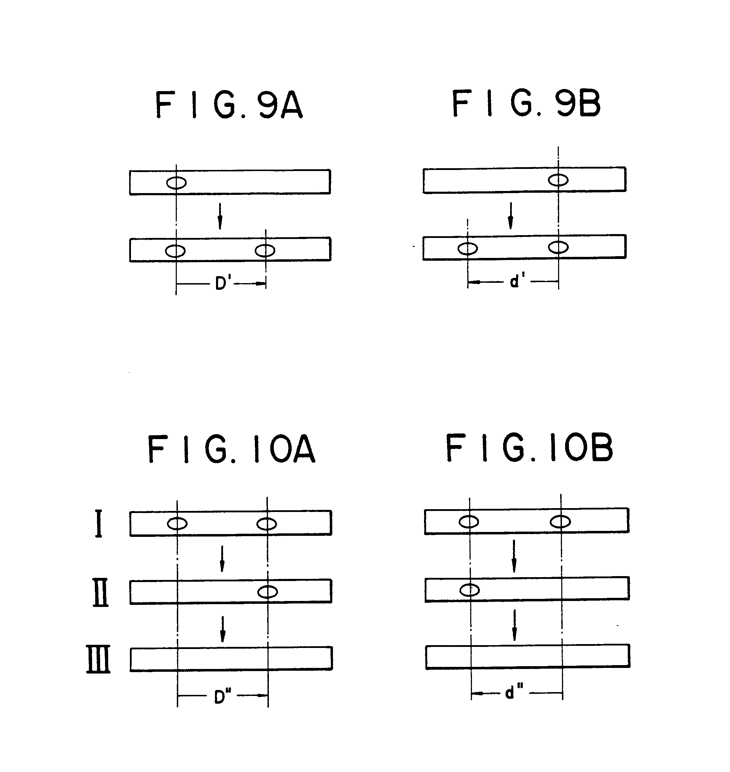

(4) Figure 9A shows the case when the panel is touched at a position with a finger and then simultaneously to the right with another finger. In this case, the tape is fed in the forward direction at a speed corresponding to the distance D'. In the case of Figure 9B, the tape is fed in the reverse direction at a speed corresponding to the distance d'.

In the case of putting two fingers on the panel with the second finger corresponding to the direction in which it is desired to feed the tape, if the second finger is moved into contact and away from the panel several times while moving the finger along the panel step-wise when the finger is touching the panel, then when the finger is stopped, the still mode results.

(5) In the case of Figure 10A, two fingers are first put on the panel at different positions (I). Then the left finger is removed (II). Subsequently, the right finger is removed (III). More specifically, by putting two fingers on the panel at different positions and then removing the fingers, with one finger corresponding to the direction in which it is desired to feed the tape, an equivalent situation arises as when the finger is moved to the right in Figure 10A. Thus, a state in which the tape is fed in the forward direction at a speed corresponding to the distance D'' is maintained. In the case of Figure 10B, the tape is fed in the reverse direction by maintaining the speed corresponding to the distance d''.

In this case, the tape running mode is not changed at the instant of the change from the state (I) to the state (II). This change, however, is stored in the judgement unit 70, and the operation noted above takes place when and only when the state (II) is changed to the state (III).

Further, in the above embodiment, the normal reproduction mode of the VTR is set when the second and third regions AR2 and AR3 of the touch panel 10 are touched with two or more fingers, or when these fingers are released from the panel substantially simultaneously.

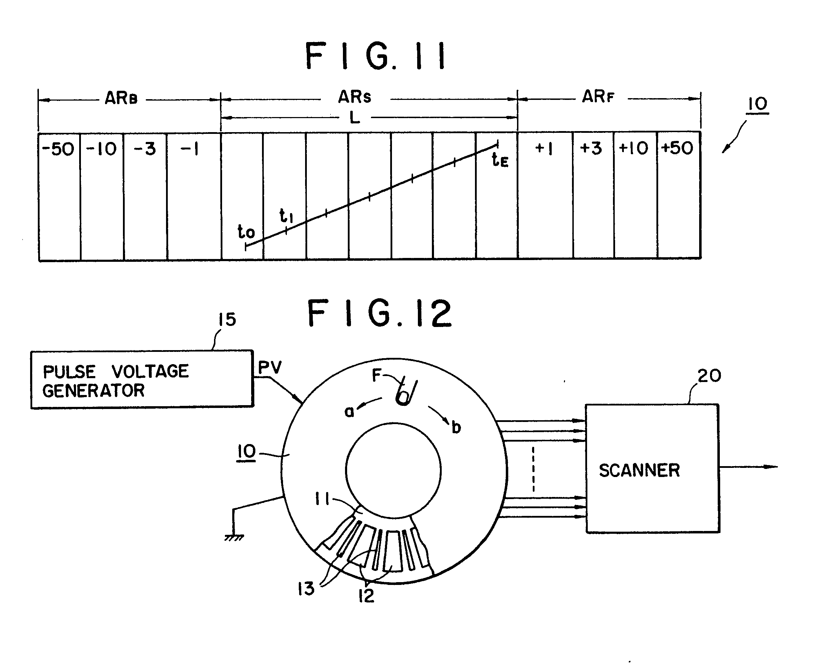

While in the above embodiment the second region AR2 of the touch panel 10 is used for the JOG mode operations, it is not essential to define a JOG mode region. For example, the touch panel 10 may have absolute regions allotted for respective control modes as shown in Figure 11.

In this instance, seven central regions ARS of the touch panel 10 are allotted as tape position control data input regions for the VTR such that the total length L logarithmically corresponds to the tape length for supplying desired position data. Four regions ARF at the right of the touch panel 10 are allotted as regions for supplying reproducing speed data in the forward reproducing mode of the VTR, that is, for supplying speed data for +1 times speed, +3 times speed, +10 times speed and +50 times speed. Four regions ARB at the left of the touch panel 10 are allotted as regions for supplying reproducing speed data in the reverse reproducing mode of the VTR, that is, for supplying speed data for −1 times speed, −3 times speed, −10 times speed, and −50 times speed.

In this embodiment, when the touch operation state of the touch panel 10 is changed from the state shown in Figure 4A where a finger is removed from the panel to the state shown in Figures 4B, 4C or 4D with at least one finger touching the panel, the change is detected as a change in the pattern data that is recognized by the recognition unit 40. Thus, the control data of the corresponding control operation mode represented by the touched region or regions of the touch panel 10 is provided from the judgement unit 70, so that the control operation of this control operation mode is brought about preferentially irrespective of any previous operation state of the VTR.

For example, when a central region ARS of the touch panel 10 is touched, the tape position control of the VTR is effected according to the desired position data provided logarithmically to the touched region.

When the state of Figures 4E, 4F or 4G is brought about by touching the touch panel 10 with a plurality of fingers while the panel has previously not been touched, the still mode of the VTR is set.

When all the fingers are removed from the touch panel 10 substantially simultaneously, the previous operation of the VTR is maintained.

When one of the fingers touching the touch panel 10 is moved along the panel either to the right or to the left, the so-called JOG mode operation of the VTR is brought about in correspondence with the movement of the finger, irrespective of the absolute divisions of the touch panel 10.

Further, it is possible to use an annular touch panel 10 to provide a feeling of operation similar to that of a dial, as shown in Figure 12.

## Claims

1. A signal reproduction apparatus for reproducing a video signal and/or an audio signal from a recording medium (T) with data reading means, the apparatus comprising:

a panel (10) having a plurality of detection regions; and

drive control means (80, 81, 82) for controlling the relative speeds of said data reading means and said recording medium (T) such as to reproduce signals from said recording medium (T);

characterized by:

touch detection means (20) for detecting the touched state of each of said detection regions;

first memory means (30) for temporarily storing detection output data from said touch detection means (20);

recognition means (40) for recognizing touched states of said panel (10) as respective patterns according to data read out from said first memory means (30).

second memory means (50) for temporarily storing pattern data obtained by said recognition means (40);

data comparison means (60) for comparing pattern data representing the prevailing touched state obtained from said recognition means (40) and pattern data representing the preceding touched state obtained from said second memory means (50) and detecting a change in the pattern data; and

control data generating means (70) for providing preset control data according to comparison output data obtained from said data comparison means (60);

whereby a video signal and/or an audio signal is reproduced from said recording medium (T) at a speed corresponding to the distance between a position at which said panel (10) is touched, and a position at which said panel (10) is touched a predetermined period of time afterwards, and in the direction corresponding to the direction from the first-touched position to the second-touched position.

2. Apparatus according to claim 1 wherein said touch detection means (20) includes scanning means for detecting the touched state of said detection regions by scanning thereof, thereby detecting the touched state of said panel (10) at predetermined time intervals.

3. Apparatus according to claim 1 or claim 2 wherein said panel (10) includes pulse generating means (15), a plurality of detection electrodes (12) arranged in a row at spaced intervals and connected to said pulse generating means (15), a plurality of grounding electrodes (13) arranged alternately with said detection electrodes (12), and an insulating layer (14) on said detection electrodes (12) and said grounding electrodes (13), whereby when said insulating layer (14) is touched by a person, the capacitance between a said detection electrode (12) and a said grounding electrode (13) under the touched portion of said insulating layer (14) is changed, the change in the capacitance being detected by said touch detection means (20).

4. Apparatus according to claim 1, claim 2 or claim 3 wherein said panel (10) has an annular shape.

## Patentansprüche

1. Signalwiedergabevorrichtung zum Wiedergeben eines Videosignals und/oder eines Audiosignals von einem Aufzeichnungsmedium (T) mit einer Datenleseeinrichtung,
wobei die Vorrichtung aufweist:
eine Platte (10) mit mehreren Erfassungsbereichen und eine Antriebssteuereinrichtung (80, 81, 82) zum Steuern der relativen Geschwindigkeit der Datenleseeinrichtung und des Aufzeichnungsmediums (T), derart, daß Signale von dem Aufzeichnungsmedium wiedergegeben werden,
gekennzeichnet durch
eine Berührungserfassungseinrichtung (20) zum Erfassen des berührten Zustandes jedes Erfassungsbereiches,
eine erste Speichereinrichtung (30) zum temporären Speichern von Erfassungsausgangsdaten aus der Berührungserfassungseinrichtung (20),
eine Erkennungseinrichtung (40) zum Erkennen berührter Zustände der Platte (10) als jeweilige Muster nach aus der ersten Speichereinrichtung (30) ausgelesenen Daten,
eine zweite Speichereinrichtung (50) zum temporären Speichern von durch die Erkennungseinrichtung (40) erhaltenen Musterdaten,
eine Datenvergleichseinrichtung (60) zum Vergleichen von den von der Erkennungseinrichtung (40) erhaltenenen herrschenden berührten Zustand darstellenden Musterdaten mit den vorhergehenden berührten Zustand darstellenden Musterdaten, die von der zweiten Speichereinrichtung (50) erhalten sind, und Erfassen einer Änderung der Musterdaten, und
eine Steuerdatenerzeugungseinrichtung (70) zum Erzeugen von Voreinstelldaten nach von der Datenvergleichseinrichtung (60) erhaltenen Vergleichsausgangsdaten,
wobei ein Videosignal und/oder ein Audiosignal von dem Aufzeichnungsmedium (T) mit einer zum Abstand zwischen einer Stelle, bei welcher die Platte (10) berührt ist, und einer Stelle, bei welcher die Platte (10) eine vorbestimmte Zeitperiode danach berührt ist, korrespondierenden Geschwindigkeit, und in einer zur Richtung von der erstberührten Stelle zur zweitberührten Stelle korrespondierenden Richtung wiedergegeben ist.

2. Vorrichtung nach Anspruch 1, wobei die Berührungserfassungseinrichtung (20) eine Abtasteinrichtung zum Erfassen des berührten Zustandes der Erfassungsbereiche durch deren Abtastung, wobei der berührte Zustand der Platte (10) in vorbestimmten Zeitintervallen erfaßt wird, aufweist.

3. Vorrichtung nach Anspruch 1 oder 2, wobei die Platte (10) eine Impulserzeugungseinrichtung (15), mehrere in einer Reihe und in beabstandeten Intervallen angeordnete und mit der Impulserzeugungseinrichtung (15) verbundene Erfassungselektroden (12), mehrere mit den Erfassungselektroden (12) abwechselnd angeordnete Erdungselektroden (13), und eine isolierende Schicht (15) auf den Erfassungselektroden (12) und den Erdungselektroden (13) aufweist, wobei bei Berührung der isolierenden Schicht (14) durch eine Person sich die Kapazität zwischen einer Erfassungselektrode (12) und einer Erdungselektrode (13) unter dem berührten Abschnitt der berührten Schicht (14) ändert, welche Änderung der Kapazität durch die Berührungserfassungseinrichtung (20) erfaßt ist.

4. Vorrichtung nach Anspruch 1, 2 oder 3, wobei die Platte (10) eine ringförmige Gestalt aufweist.

## Revendications

1. Appareil de reproduction de signaux destiné à reproduire un signal vidéo et/ou un signal de son à partir d'un support d'enregistrement (T) avec un dispositif de lecture de données, l'appareil comportant:
un panneau (10) comprenant plusieurs régions de détection; et
un dispositif de commande d'entraînement (80, 81, 82) pour commander les vitesses relatives dudit dispositif de lecture de données et dudit support d'enregistrement (T) de maniére à reproduire des signaux à partir dudit support d'enregistrement (T);
caractérisé par:
un dispositif de détection de toucher (20) destiné à détecter l'état touché de chacune desdites régions de détection;
un premier dispositif de mémoire (30) destiné à mémoriser momentanément des données de sortie de détection provenant dudit dispositif de détection de toucher (20);
un dispositif de reconnaissance (40) destiné à reconnaître des états touchés dudit panneau (10) comme des configurations respectives en fonction des données lues dans ledit premier dispositif de mémoire (30);
un second dispositif de mémoire (50) destiné à mémoriser momentanément des données de configuration obtenues par ledit dispositif de reconnaissance (40);
un dispositif de comparaison de données (60) destiné à comparer des données de configuration représentant l'état touché prévalant obtenu dudit dispositif de reconnaissance (40) est des données de configuration représentant l'état touché précédent obtenu dudit second dispositif de mémoire (50) et détectant un changement dans la configuration des données; et
un dispositif générateur de données de commande (70) destiné à produire des données de commande prédéterminées en fonction des données de sortie de comparaison obtenues dudit dispositif de comparaison de données (60);

de manière qu'un signal vidéo et/ou un signal de son soit reproduit à partir dudit support d'enregistrement (T) à une vitesse correspondant à la distance entre une position dans laquelle ledit panneau (10) est touché et une position dans laquelle ledit panneau (10) est touché à une période prédéterminée par la suite, et dans la direction correspondant à la direction allant de la première position touchée à la seconde position touchée.

2. Appareil selon la revendication 1, dans lequel ledit dispositif de détection de toucher (20) comporte un dispositif d'analyse destiné à détecter l'état touché desdites régions de détection en les explorant, de manière à détecter l'état touché dudit panneau (10) à des intervalles de temps prédéterminés.

3. Appareil selon la revendication 1 ou la revendication 2, dans lequel ledit panneau (10) comporte un dispositif générateur d'impulsions (15), plusieurs électrodes de détection (12) disposées en une rangée dans des positions espacées et connectées audit dispositif générateur d'impulsions (15), plusieurs électrodes de mise à la masse (13) disposées alternativement avec lesdites électrodes de détection (12) et une couche isolante (14) sur lesdites électrodes de détection (12) et lesdites électrodes de mise à la masse (13) de manière que lorsque ladite couche isolante (14) est touchée par une personne, la capacité entre une desdites électrodes de détection (12) et l'une desdites électrodes de mise à la masse (13) au-dessous de la partie touchée de ladite couche isolante (14) est changée, le changement de capacité étant détecté par ledit dispositif de détection de toucher (20).

4. Appareil selon la revendication 1, la revendication 2 ou la revendication 3, dans lequel ledit panneau (10) a une forme annulaire.

# F I G. 1

TOUCH PANEL 10

SCANNER 20

MEMORY 30

MEMORY 50

RECOGNITION UNIT 40

DATA COMPARATOR 60

JUDGMENT UNIT 70

CONTROL DATA

CAPSTAN DRIVE CONTROL SECTION 81

CONTROL SIGNAL GENERATOR 80

REEL MOTOR DRIVE CONTROL SECTION 82

S1
S2

83

85

84

T

# FIG. 2A

PULSE VOLTAGE GENERATOR 15

PV

AR1 AR2 AR3

AR13
AR12
AR11

AR33
AR32
AR31

F

a ← → b

$l_{11}$ $l_{12}$ L1 12 13 L2 $l_{32}$ $l_{31}$

10

SCANNER 20

# FIG. 2B

$l_{11}$ $l_{12}$ L1 14 a ← → b L2 $l_{32}$ $l_{31}$

F

13 12 11

10

EP 0 178 157 B1

FIG.3A

FIG.3B

FIG.5A

FIG.5B

FIG.5C

FIG. 4A

FIG. 4B

FIG. 4C

d<ε

FIG. 4D

d<ε d<ε d<ε

FIG. 4E

d>ε

FIG. 4F

d<ε d>ε d<ε d<ε

FIG. 4G

d>ε d>ε d>ε d>ε

FIG.8C

FIG.6B

FIG.7B

FIG.8B

FIG.6A

FIG.7A

FIG.8A

# F I G. 9A

# F I G. 9B

# F I G. 10A

# F I G. 10B

I

II

III

# F I G. 11

EP 0 178 157 B1

ARB    ARs    ARF

L

| -50 | -10 | -3 | -1 | | | | | | | $t_E$ | +1 | +3 | +10 | +50 |

$t_0$  $t_1$

10

# F I G. 12

15

PULSE VOLTAGE
GENERATOR

PV

F

a    b

10

11

13   12

SCANNER

20